(19) Europäisches Patentamt
European Patent Office
Office européen des brevets

(11) **EP 4 664 097 A1**

(12) **EUROPEAN PATENT APPLICATION**

(43) Date of publication:
**17.12.2025 Bulletin 2025/51**

(21) Application number: **25181080.0**

(22) Date of filing: **05.06.2025**

(51) International Patent Classification (IPC):
***G01N 21/84*** (2006.01)   ***G01N 21/77*** (2006.01)

(52) Cooperative Patent Classification (CPC):
**G01N 21/8483;** G01N 2021/7759; G01N 2021/7786

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **11.06.2024 JP 2024094626**

(71) Applicant: **ARKRAY, Inc.
Kyoto-shi, Kyoto 601-8045 (JP)**

(72) Inventor: **HIRAMURA, Fumito
Kyoto, 602-0008 (JP)**

(74) Representative: **Mathys & Squire
The Shard
32 London Bridge Street
London SE1 9SG (GB)**

(54) **DETERMINATION SYSTEM, TEST STRIP, AND FLUORESCENCE REFERENCE STRIP**

(57)    A determination system (10) including a fluorescence determination element (66), a light source (42), and a control section (100). The fluorescence determination element (66) has a predetermined plural number of fluorescent portions (66a to 66f) arranged at predetermined positions. The light source (42) irradiates the fluorescence determination element (66) with a single excitation light. The control section (100) includes an image acquisition unit (235) that acquires calibration data, which is image data from capturing the fluorescence determination element (66) irradiated by the light source (42), and a determination unit (245) that determines fluorescence information based on the calibration data.

FIG.3A

**Description**

BACKGROUND

Technical Field

The technology disclosed herein relates to a determination system that corrects optical information for determining an optical recognition state of a means that acquires an image, and to a test strip and a fluorescence reference strip employed in such a determination system.

Related Art

In a measurement system that uses a test strip applied with a reaction reagent to detect a reaction between a measurement target in a test sample and the reaction reagent by optical information such as emission intensity, sometimes differences arise in detected color tone and intensity of the optical information due to the instrument employed imparting an effect on the measurement results.

The technology disclosed in Japanese National Phase Publication (JP-A) No. 2022-518364, Japanese Patent Application Laid-Open (JP-A) No. 2012-47462, US 2010/0321681 A1, and Japanese Patent Application Laid-Open (JP-A) No. 2022-2116 presents technology related to color tone correction. Japanese National Phase Publication (JP-A) No. 2022-518364 discloses technology related to color reference samples for a urine test paper strip observed under visible light. Japanese Patent Application Laid-Open (JP-A) No. 2012-47462 discloses technology for fluorescence correction utilizing marked microparticles having plural fluorescence wavelengths. US 2010/0321681 A1 discloses technology using two ultraviolet light sources to correct a target image based on an acquired fluorescence value of a reference sample. Japanese Patent Application Laid-Open (JP-A) No. 2022-2116 discloses technology in which a user wearing glasses having plural colors colored at predetermined positions is captured, and the color of the skin of the user is determined from image data from capturing colors of the glasses.

SUMMARY

An exemplary embodiment of the present disclosure provides a determination system that determines optical information related to measurement of a measurement target based on differences of the instrument employed.

A determination system of the present disclosure includes a fluorescence determination element, a light source, and a control section. The fluorescence determination element has a predetermined plural number of fluorescent portions arranged at predetermined positions. The light source irradiates the fluorescence determination element with a single excitation light. The control section includes an image acquisition unit that acquires calibration data, which is image data from capturing the fluorescence determination element irradiated by the light source, and a determination unit that determines fluorescence information based on the calibration data.

Exemplary embodiments of the present disclosure provide a determination system that determines optical information related to measurement of a measurement target based on differences of the instrument employed.

BRIEF DESCRIPTION OF THE DRAWINGS

Exemplary embodiments will be described in detail based on the following figures, wherein:

Fig. 1 is a perspective view from above of a holder employed in an exemplary embodiment;
Fig. 2 is a perspective view from below illustrating an enlargement of a vicinity of an insertion port of a holder;
Fig. 3A is a plan view of a test strip employed in an exemplary embodiment;
Fig. 3B is a schematic diagram of an example of a fluorescence determination element;
Fig. 4 is a perspective view from above of a state in which a test strip has been mounted to a holder;
Fig. 5 is a plan view of the state in Fig. 4;
Fig. 6 is a perspective view from above of a placement portion employed in an exemplary embodiment;
Fig. 7 is a bottom view of a placement portion;
Fig. 8 is a perspective view from above of a housing of an exemplary embodiment;
Fig. 9 is a perspective view from above of a state in which a test strip has been mounted to the housing of Fig. 8;
Fig. 10 is a bottom view of a mobile device employed in an exemplary embodiment;
Fig. 11 is a perspective view from above of a determination system of an exemplary embodiment;
Fig. 12 is a perspective view from above of a state in which part of an external wall section has been removed from the determination system of Fig. 11;

Fig. 13 illustrates a cross-section taken along XIII-XIII of Fig. 12;
Fig. 14 is a functional block diagram of a determination system of an exemplary embodiment;
Fig. 15 illustrates a block diagram of a control section;
Fig. 16 is a flowchart illustrating an overview of a measurement method of a measurement target in a determination system of an exemplary embodiment;
Fig. 17A is a flowchart illustrating an overview of a correction information computation of a first example of a determination system of an exemplary embodiment;
Fig. 17B is a flowchart illustrating an overview of a correction information computation of a second example of a determination system of an exemplary embodiment;
Fig. 18 is a flowchart illustrating an example of correction of measurement data;
Fig. 19 is an example of measurement data captured by an capturing section and calibration data;
Fig. 20 is a graph illustrating an example of correction of image data;
Fig. 21 illustrates a plan view of a fluorescence reference strip in a different exemplary embodiment; and
Fig. 22 is a perspective view from above of a holder of yet another different exemplary embodiment.

## DETAILED DESCRIPTION

Hereinafter, exemplary embodiments of the present disclosure will be described, with reference to the drawings. Common reference numerals across the drawings indicate same parts, unless explicitly stated otherwise. Moreover, each member and each site as represented in the drawings are each merely schematic representations thereof, and sizes and positional relationships of an actual product are not necessarily accurately represented therein.

(1) Holder

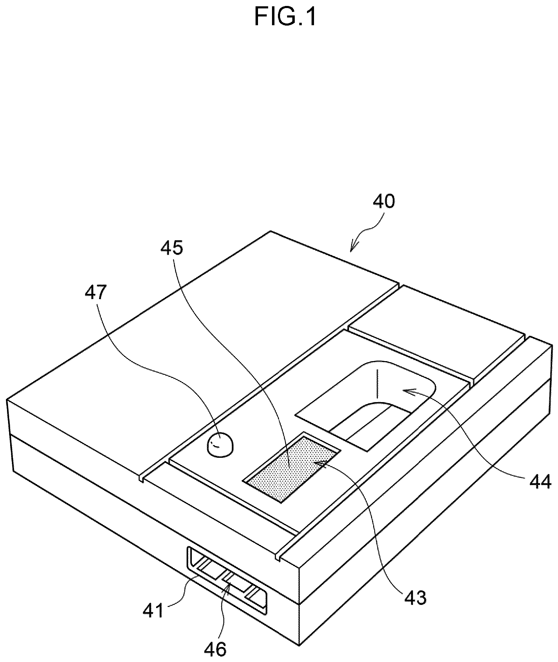

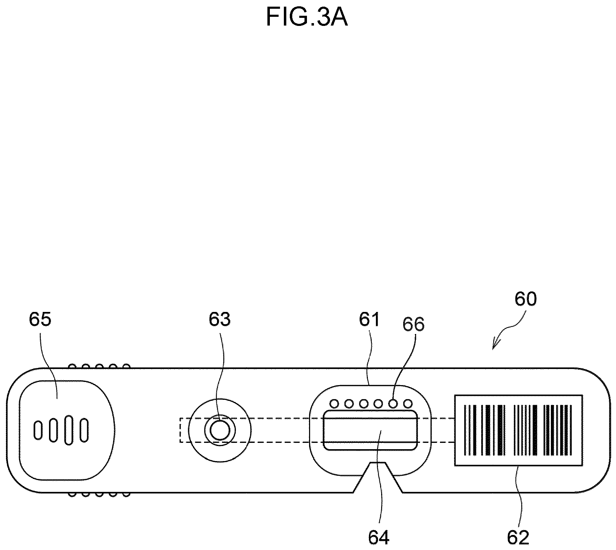

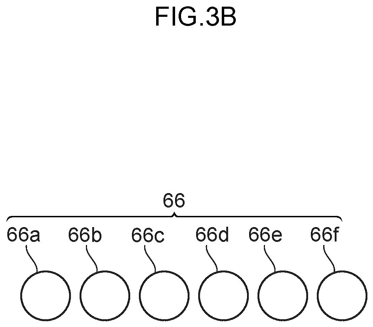

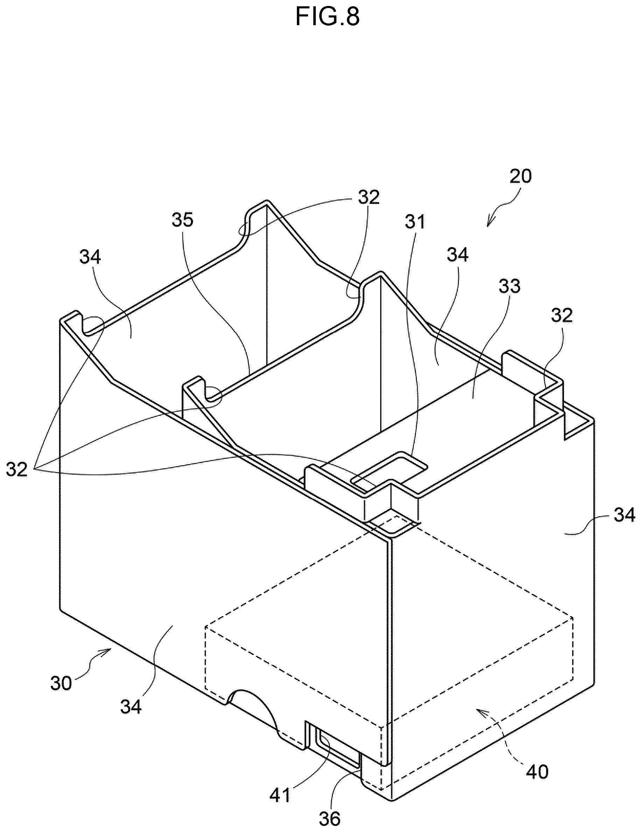

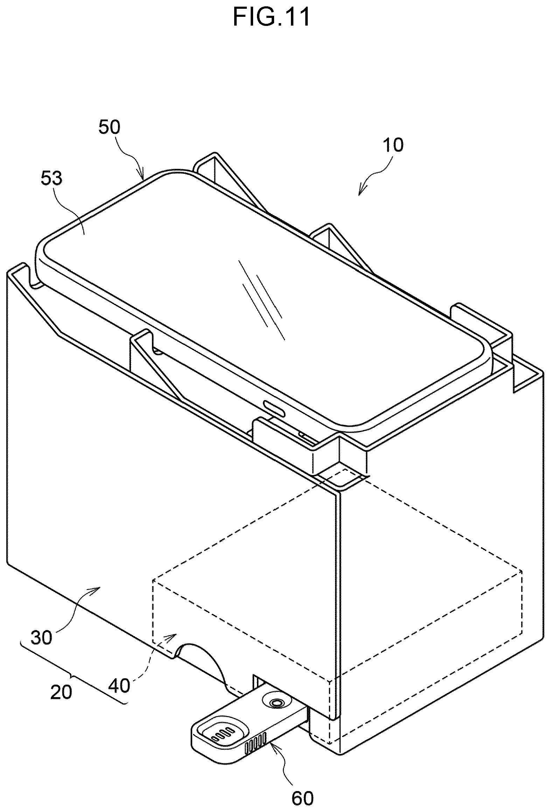

Fig. 1 is a perspective view from above of a holder 40 employed in a determination system 10 of the present exemplary embodiment (see Fig. 11). The determination system 10 of the present disclosure may include a holder 40 such as illustrated in Fig. 1 as a member configuring a housing 20 (see Fig. 8). The holder 40 exhibits a box shape and is formed with two openings in an upper face thereof, a measurement opening section 43 and an identification opening section 44. An optical filter 45 is fitted into the measurement opening section 43. A sensor 47 for sensing light is furthermore provided to the upper face thereof. An insertion port 41 for inserting a test strip 60, described later, into (see Fig. 3) opens onto a side face of the holder 40. The internal space of the insertion port 41 is a space in communication with both the measurement opening section 43 and the identification opening section 44, and configures a housing section 46 that is a space housing part of the test strip 60.

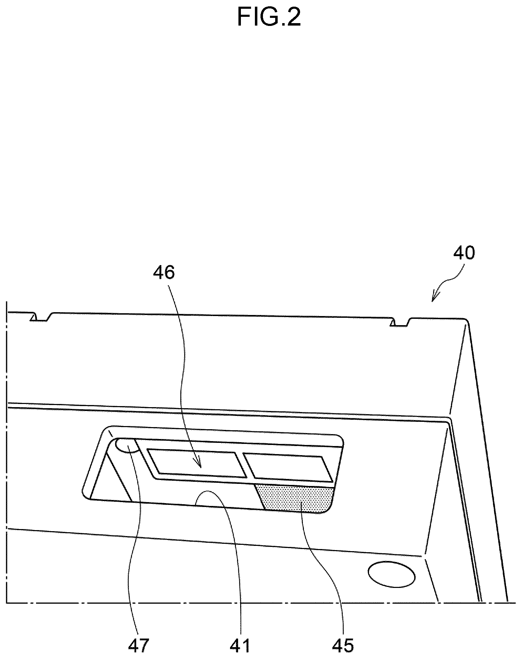

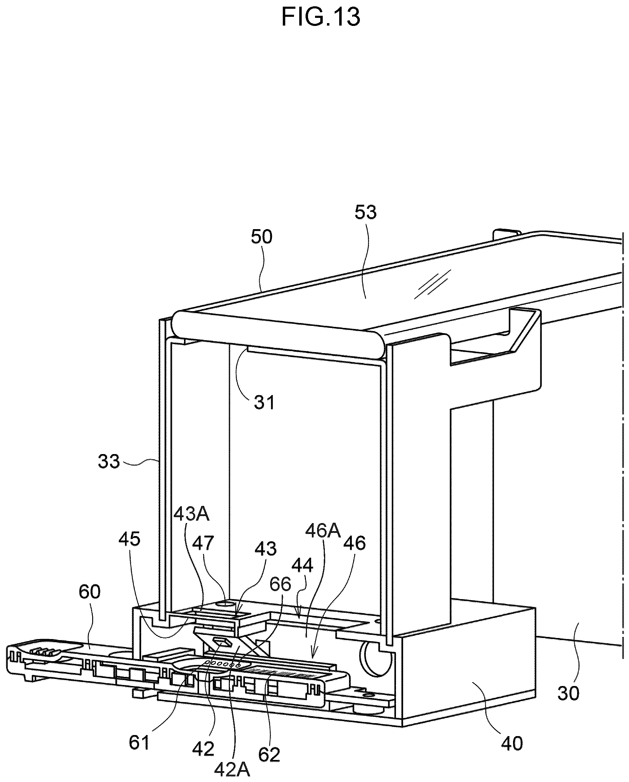

Fig. 2 is a perspective view from below illustrating an enlargement of a vicinity of the insertion port 41 of the holder 40. The sensor 47 is provided in the vicinity of the measurement opening section 43 of the housing section 46 which is the internal space of the insertion port 41. Light containing light rays of a wavelength appropriate for capturing a measurement region 61 is radiated from a light source 42 (see Fig. 13) provided inside the housing section 46. Then, the optical filter 45 has optical characteristics that suitably transmit only light rays of the wavelength appropriate for such capturing.

(2) Test Strip

Fig. 3A illustrates a plan view of the test strip 60 employed in the determination system 10 of the present exemplary embodiment (see Fig. 11). The test strip 60 exhibits a flat bar shaped external profile. A grip portion 65 where the upper face side is indented is formed to one end of the test strip 60, and the test strip 60 can be gripped by pinching the grip portion 65 with finger tips. A test paper 64 having a shape elongated along the length direction of the test strip 60 is housed inside the test strip 60. The test paper 64 is exposed to above at two locations of openings formed in the upper face of the test strip 60. These two locations of openings include a test sample spotting portion 63 in the vicinity of the grip portion 65, and, further away from the grip portion 65, a measurement region 61 where measurement of the measurement target is performed. Furthermore, an identification region 62 recorded with information related to the test strip 60 is formed at the other end side of the test strip 60, namely, on the upper face of a location furthest away from the grip portion 65.

Furthermore, a fluorescence determination element 66 containing plural (six in the drawings) fluorescent portions 66a to 66f (see Fig. 3B) is provided in a vicinity of the measurement region 61 opening. A predetermined plural number of color elements are respectively arranged at predetermined positions of the fluorescent portions 66a to 66f. The fluorescence determination element 66 is irradiated with a single excitation light from the light source 42. Color elements employed in the respective fluorescent portions 66a to 66f emit mutually different fluorescent light on being irradiated with the single excitation light. The differences in the fluorescent light for each of the fluorescent portions 66a to 66f may be a difference in fluorescence intensity and may be a difference in wavelength. In the following, a side of the test strip 60 near to the grip portion 65 is called the "upstream side", and a side thereof near to the identification region 62 is called the "downstream side".

The test paper 64 is a water absorbent body such as filter paper or is configured by coating a water absorbent layer onto a surface of a synthetic resin substrate. A reaction reagent that reacts with the measurement target to emit fluorescent light is applied to the test paper 64. A test sample suspected of containing the measurement target is spotted onto the test sample spotting portion 63. Examples of the test sample include a liquid sample collected from a living body, for example blood or urine, or a diluent resulting from diluting these with an appropriate solvent, or solid matter or mucus collected from a living body, or a liquid sample having any of these diluted or suspended in an appropriate solvent. Examples of measurement targets include components contained in a liquid sample, or antigens derived from external microorganisms or viruses. The test paper 64 of the present exemplary embodiment is employed in fluorescent immunochromatography, however a test paper employed in general chromatography without fluorescent light emission may be employed, moreover, as long as a reaction reagent that reacts with the measurement target is employed, a test paper employed for another type of chromatography not based on the principles of immunoreaction may be employed.

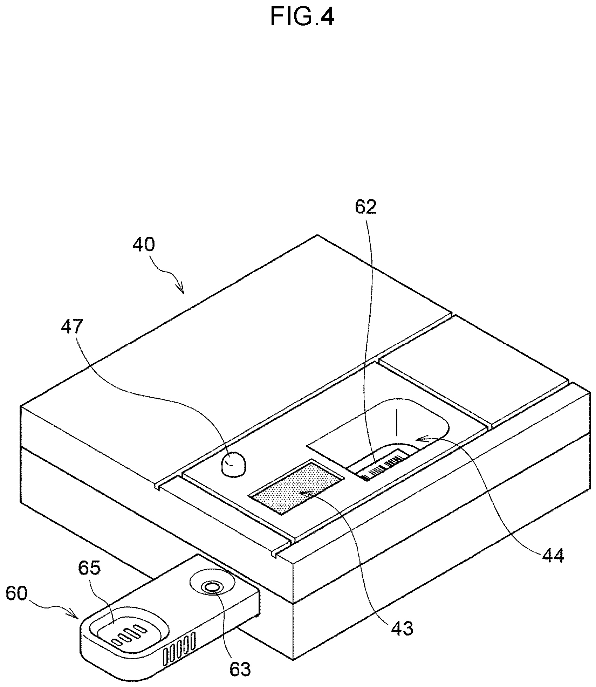

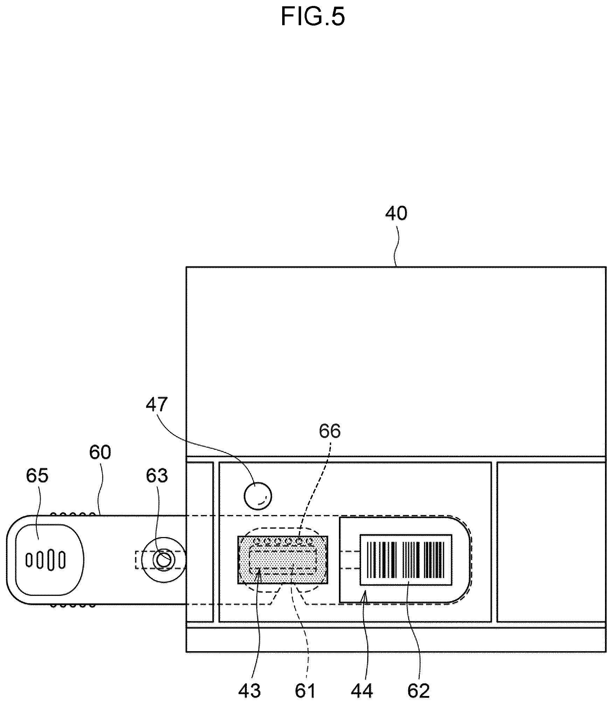

Fig. 4 is a perspective view from above illustrating a state in which the test strip 60 is mounted to the holder 40. Fig. 5 is a plan view illustrating this state. As illustrated in Fig. 4 and Fig. 5, the test strip 60 is inserted downstream side first through the insertion port 41 and into the interior of the housing section 46. This state is one in which the measurement region 61 is positioned in the same flat plane as the measurement opening section 43, and moreover the identification region 62 is positioned in the same flat plane as the identification opening section 44, as illustrated in Fig. 5. Furthermore, the fluorescence determination element 66 provided on the test strip 60 is observed through the measurement opening section 43.

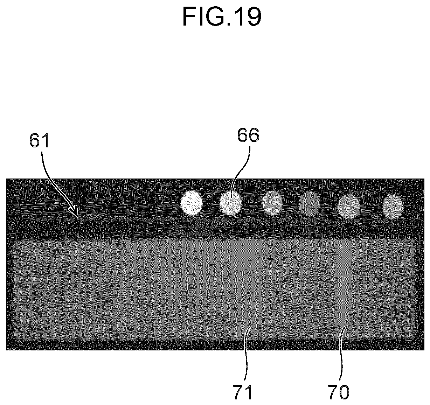

In this state, when a test sample is spotted onto the test sample spotting portion 63 and flows downstream under a capillary action phenomenon of the test paper 64, a control reaction band 70 indicating that the test sample has been spotted in the measurement region 61 is generated shifted toward the downstream side (see Fig. 19). Furthermore, in cases in which the measurement target is contained in the test sample, then the target reaction band 71 (see Fig. 19) is generated relatively shifted toward the upstream side at an intensity according to the concentration thereof. In the present exemplary embodiment, the control reaction band 70 and the target reaction band 71 are made visible as fluorescent light generated by the excitation light emitted from the light source 42. The determination system 10 of the present exemplary embodiment measures a concentration of the measurement target by irradiating the excitation light emitted from the light source 42 onto the target reaction band 71 and measuring the intensity of the fluorescent light generated. The identification region 62 is, for example, stored with information related to the test strip 60, such as which type of test paper 64 is housed in the test strip 60. Examples of the identification region 62 include a bar code, a QR code (registered trademark), or the like.

(3) Placement Section

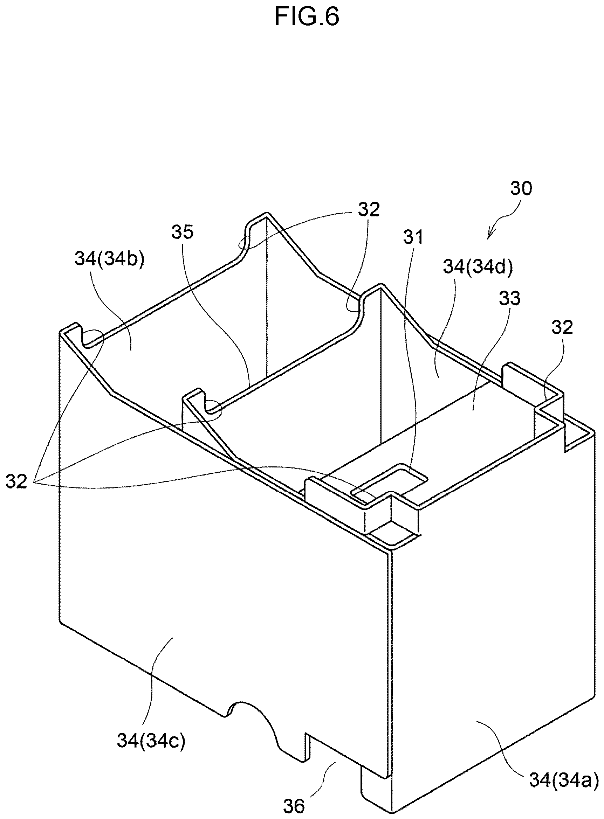

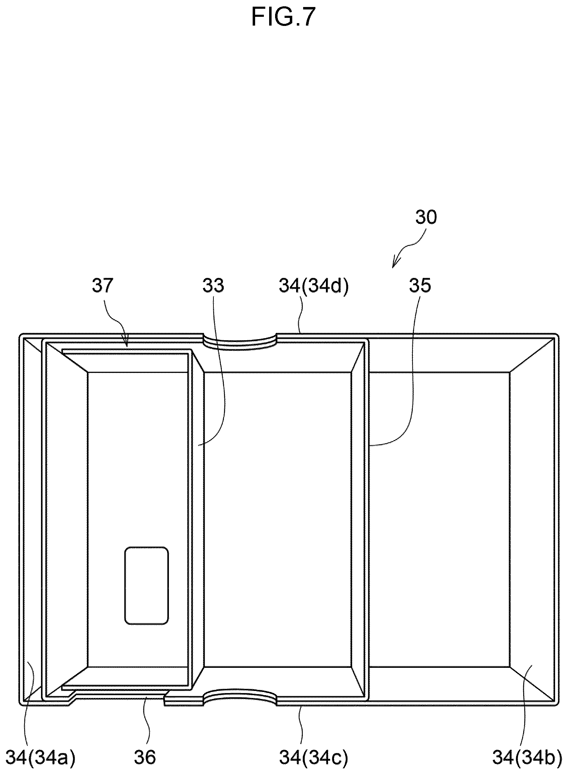

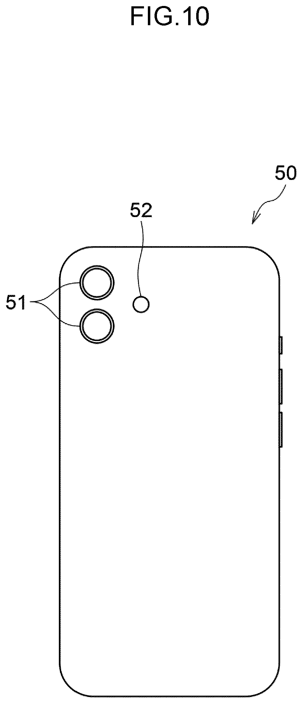

Fig. 6 is a perspective view from above of a placement portion 30 employed in the determination system 10 of the present exemplary embodiment (see Fig. 11). Moreover, Fig. 7 is a bottom view of the placement portion 30. Moreover, the placement portion 30 is configured as a paper box having a substantially cuboidal shape with open upper face and lower face. The four side faces of the placement portion 30 configure an external wall section 34 that is vertically upstanding. A placement frame 32, which is a frame for placement of a mobile device 50 (see Fig. 10), described later, is formed on the upper face of the placement portion 30. At one side (hereafter referred to as the "front side") of the interior of the placement portion 30, a light blocking section 33 is formed in a box shape having a closed upper face that includes a window 31 opening therein and having an open lower face (see Fig. 7).

Herein, the four faces of the external wall section 34 include a front face 34a that is the face on the side where the light blocking section 33 is positioned, a back face 34b that is the face on the opposite side thereto, a left side face 34c that is the face on the left side when viewed from the front face 34a, and a right side face 34d that is the face on opposite side thereto. Moreover, the interior of the placement portion 30 is partitioned by a reinforcement portion 35 parallel to the front face 34a and the back face 34b. Furthermore, a rectangular shaped cut-out portion 36 is formed at a lower edge of the front side of the left side face 34c.

(4) Housing

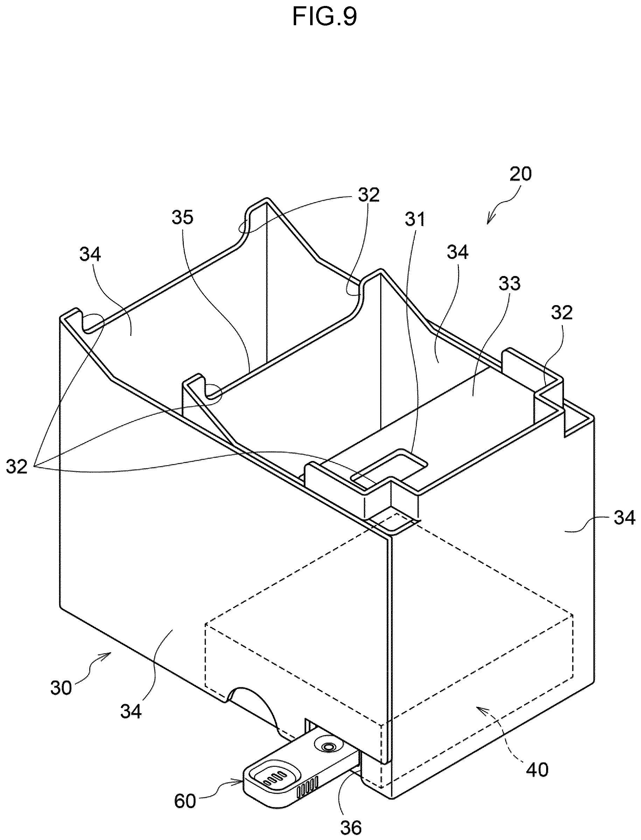

As illustrated in Fig. 7, a gap is generated between the lower edge of the light blocking section 33 and the lower edge of the external wall section 34, and a space surrounded on four sides by the front face 34a, the reinforcement portion 35, the left side face 34c, and the right side face 34d, and having a height of this gap, is called a housing area 37. The housing 20 illustrated in Fig. 8 is configured by the holder 40 being mounted in the housing area 37. In such a state, the cut-out portion 36 of the placement portion 30 and the insertion port 41 of the holder 40 are aligned with each other. A state in which the test strip 60 is mounted to the insertion port 41 in this state, as illustrated in Fig. 4 and Fig. 5, is as illustrated in the perspective view from above of Fig. 9.

(5) Mobile Device

Fig. 10 illustrates a bottom view when the mobile device 50 is employed in the determination system 10 of the present exemplary embodiment (see Fig. 11) in a state placed in the housing 20. In the present exemplary embodiment, a smartphone is employed as the mobile device 50, however a tablet terminal with a camera function may be employed as the mobile device 50. An capturing section 51 configured by a camera, and an illumination section 52 configured by a flash that radiates visible light in cooperation therewith, are provided at a bottom face side (so-called back face) of the mobile device 50. Note that the top face side (so-called front face) of the mobile device 50 is configured by a display section 53 (see Fig. 11).

(6) Determination System

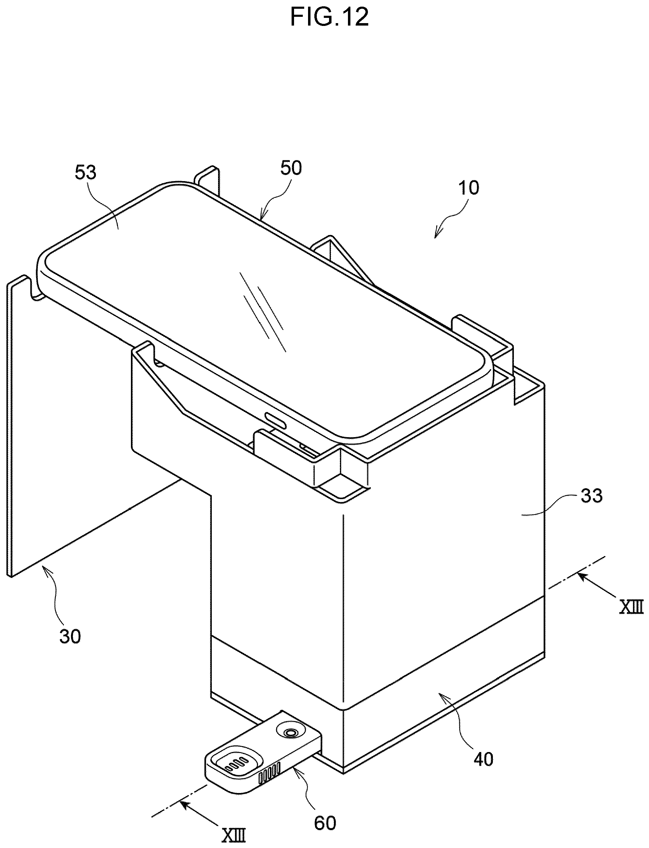

At the inside of the placement frame 32 of the housing 20 illustrated in Fig. 9, the mobile device 50 illustrated in Fig. 10 is placed with the display section 53 facing upward while the capturing section 51 and the illumination section 52 are aligned with the window 31, with the determination system 10 of the present exemplary embodiment configured as illustrated in the perspective view from above of Fig. 11. Entry of extraneous light is impeded when, from this state, the measurement opening section 43 and the identification opening section 44 of the holder 40 are covered by the light blocking section 33, as illustrated in the perspective view from above of Fig. 12, which illustrates a state in which the front face 34a, the left side face 34c, and the right side face 34d of the external wall section 34 have been removed.

Moreover, as illustrated in Fig. 13, which illustrates a cross-section taken along line XIII-XIII of Fig. 12, the measurement opening section 43 and the optical filter 45 are positioned above the measurement region 61 of the test strip 60, and the identification opening section 44 is positioned above the identification region 62. Furthermore, the light source 42 is installed below and slightly at the back-face side of the measurement opening section 43, and irradiates the measurement region 61 from diagonally above. More specifically, a light source installation plate 42A is provided so as to extend diagonally from a lower edge of a housing section back face wall 46A abutting a back-face side of the housing section 46 toward a back-face edge 43A of the measurement opening section 43. Then, the light source 42 is able to irradiate the measurement region 61 diagonally from the back-face side (namely, in a direction perpendicular to the extension direction of the light source installation plate 42A) due to the light source 42 being installed to the lower-face side of the light source installation plate 42A. The light source 42, as well as radiating excitation light onto the test strip 60 placed with the reagent, also radiates the excitation light onto the fluorescence determination element 66 mounted to the test strip 60. The window 31 of the placement portion 30 is positioned directly above the measurement opening section 43, and through this, the visual field of the capturing section 51 of the mobile device 50 includes the identification region 62 and the fluorescence determination element 66 in addition to the measurement region 61,

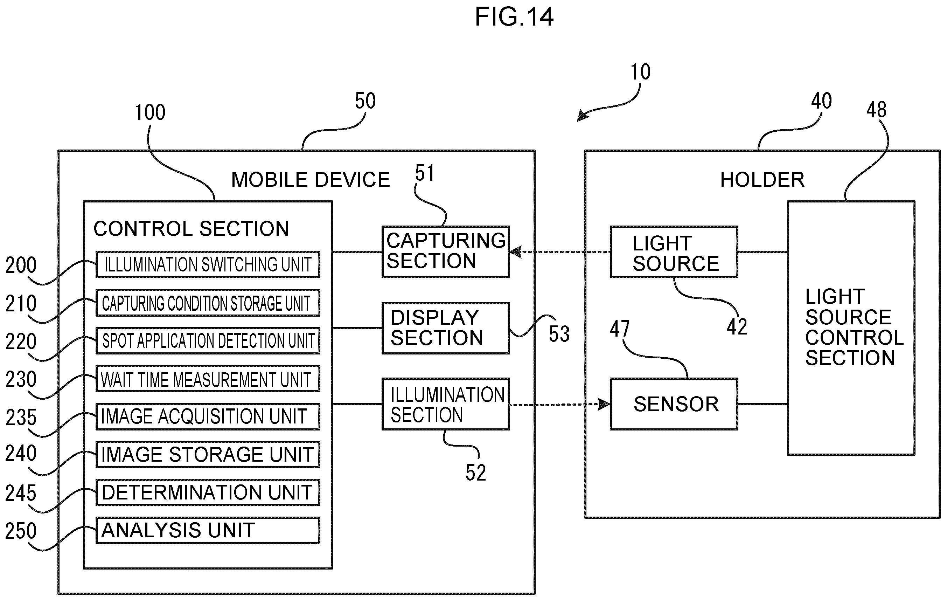

Fig. 14 illustrates the determination system 10 of the present exemplary embodiment as represented by a functional block diagram. The mobile device 50 is provided with the capturing section 51 and the illumination section 52 illustrated in Fig. 10, and the display section 53 illustrated in Fig. 11, and also with a control section 100 that controls these. The control section 100 utilizes a CPU 110, ROM 120, RAM 130, and a storage device 150, described later, as hardware resources of a computer to function as each of the following units.

Namely, the control section 100 functions as an illumination switching unit 200 that switches illumination by the illumination section 52 ON/OFF (illumination/extinguished illumination). The illumination switching unit 200 may, specifically, be implemented as an application installed on the mobile device 50, or in addition thereto may be implemented as a unit that utilizes electrical or optical sensing between itself and the holder 40, or alternatively may be implemented as a wireless communication unit (for example, Bluetooth (registered trademark) or the like) between itself and the holder 40. Moreover, the control section 100 functions as a capturing condition storage unit 210 stored with conditions for capturing with the capturing section 51. Conditions defined as the capturing conditions include, for example, a wait time needed for reaction between the measurement target and the reagent. Moreover, through the capturing section 51, the control section 100 functions as a spot application detection unit 220 to detect spot application of the test sample onto the test strip 60. Moreover, the control section 100 also functions as a wait time measurement unit 230 to measure the wait time. Moreover, the control section 100 functions as an image acquisition unit 235 to acquire calibration data, this being image data obtained by capturing the fluorescence determination element 66 irradiated by the light source 42, and measurement data, this being image data from capturing the test strip 60 irradiated by the light source 42. Then, the control section 100 functions as an image storage unit 240 to store an image of a measurement region 61 captured by the capturing section 51. Moreover, the control section 100 functions as a determination unit 245 to determine fluorescence information determined from plural fluorescence data contained in the calibration data, by determination based on the layout of the fluorescence determination element 66. Moreover, the control section 100 functions as an analysis unit 250 to compute correction information by comparing the fluorescence information determined by the determination unit 245 against plural reference values that serve as respective references for the fluorescent portions 66a to 66f, and to also correct the measurement data based on the correction information.

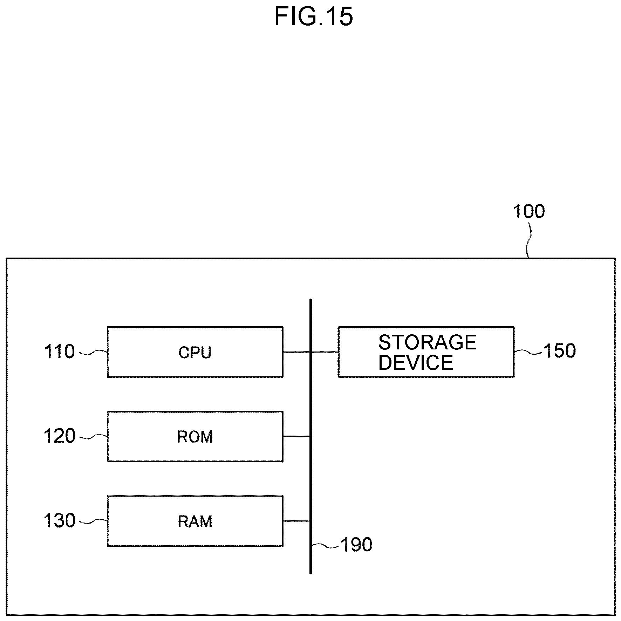

As illustrated by the hardware configuration of Fig. 15, the control section 100 includes the central processing unit (CPU) 110, the read only memory (ROM) 120, the random access memory (RAM) 130, and the storage device 150. These configurations are each connected together through a bus 190 so as to be capable of communicating with each other.

The CPU 110 is a central processing unit that executes various programs that are capable of being implemented as installed applications and controls each section. Namely, the CPU 110 reads a program from the ROM 120 or the storage device 150, and executes the program using the RAM 130 as a work area. The CPU 110 controls the determination system 10 according to the program recorded on the ROM 120 or the storage device 150.

The ROM 120 is stored with various programs and various data. The RAM 130 serves as a work area for temporarily storing programs and/or data. The storage device 150 is configured as storage by a hard disk drive (HDD), solid state drive (SSD), flash memory, or the like, and stores various programs including an operating system and various data.

On the other hand, the holder 40 includes the light source 42 that irradiates the measurement region 61, the sensor 47 that detects ON/OFF (illumination/extinguished illumination) of the illumination section 52, and a light source control section 48 that illuminates the light source 42 when input with a signal from the sensor 47. The light source control section 48 is configured by hardware resources of a computer similarly to the control section 100 of the mobile device 50. Note that as long as the light source control section 48 is able to perform control to illuminate the light source 42 during capturing of the measurement region 61, described later, then the light source control section 48 may be implemented as a configuration in which the light source 42 is illuminated irrespective of input mode (for example, wired or wireless) of the signal from the sensor 47. Moreover, the light source control section 48 may also perform control to extinguished illumination of the light source 42.

As stated above, the determination system 10 of the present exemplary embodiment is equipped with the control section 100 including the fluorescence determination element 66 having the predetermined plural number of fluorescent portions 66a to 66f arranged at predetermined positions thereon, the light source 42 that irradiates the fluorescence determination element 66 with the single excitation light, the image acquisition unit 235 that acquires calibration data, this being image data from capturing the fluorescence determination element 66 irradiated by the light source 42, and the determination unit 245 that determines fluorescence information based on the calibration data. Namely, the present disclosure is technology to determine fluorescence information irrespective of whether or not measurement is subsequently performed. Examples of cases in which measurement is not subsequently performed include, for example, cases of a system employed to determine the performance of the image acquisition unit 235, or cases of a system employed to perform appropriate error display or perform audio notification or the like to a user according to the results of determining the performance of the image acquisition unit 235.

Moreover, in the determination system 10 of the present exemplary embodiment, the fluorescent portions 66a to 66f emit mutually different fluorescent light on being irradiated by the excitation light, the calibration data includes plural fluorescence data corresponding to the respective fluorescent light emitted by the plural fluorescent portions 66a to 66f, the light source 42 radiates the excitation light onto the test strip 60 placed with the reagent in addition to onto the fluorescence determination element 66, the image acquisition unit 235 acquires, in addition to the calibration data, measurement data, this being image data from capturing the test strip 60 irradiated by the light source 42, and the determination system 10 preferably also includes the analysis unit 250 that computes correction information by comparing the fluorescence information determined by the determination unit 245 from the plural fluorescence data against each of plural reference values that act as a reference for the respective fluorescent portions 66a to 66f, and also corrects the measurement data based on the correction information. Furthermore, preferably in the determination system 10 of the present exemplary embodiment, in addition onto the fluorescence determination element 66, the light source 42 irradiates the excitation light onto the test strip 60 placed with the reagent, the image acquisition unit 235 acquires, in addition to the calibration data, measurement data, which is image data capturing the test strip 60 irradiated by the light source 42, and the analysis unit 250 corrects the measurement data based on the correction information.

Herein, the image acquisition unit 235 preferably, as well as capturing the fluorescence determination element 66 and the test strip 60 irradiated by the light source 42 as a single image data, also acquires the calibration data and the measurement data from a single image data. Furthermore, the determination unit 245 preferably determines the fluorescence information from the calibration data based on the layout of the fluorescence determination element 66. Moreover, the respective fluorescent light of the plural fluorescent portions 66a to 66f may be mutually different from each other in fluorescence intensity as the fluorescence information, or the respective fluorescent light of the plural fluorescent portions 66a to 66f may be mutually different from each other in wavelength as the fluorescence information.

Note that preferably the determination system 10 of the present exemplary embodiment is further equipped with the mobile device 50 including a camera as the capturing section 51, with the CPU 110 of the mobile device 50 configured so as to function as the control section 100. Preferably the determination system 10 of the present exemplary embodiment is further equipped with the housing 20 mounted with the test strip 60, and the housing 20 is equipped with the placement portion 30 for holding the mobile device 50, and the holder 40 that has the test strip 60 inserted therein and that is also provided with the light source 42 and mounted to the placement portion 30.

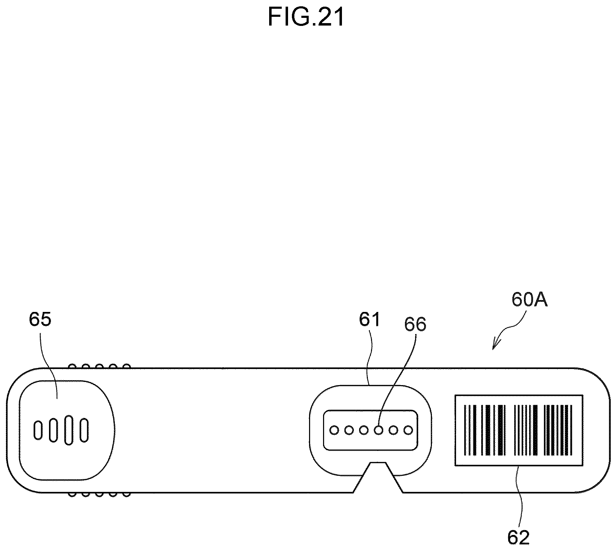

Then, the fluorescence determination element 66 may be provided to the test strip 60. The test strip 60 provided with the fluorescence determination element 66 is employed in the determination system 10 of the present exemplary embodiment. Alternatively, the fluorescence determination element 66 may be provided to the housing 20. Alternatively, the fluorescence determination element 66 may be provided to a fluorescence reference strip 60A (see Fig. 21), as described later, that is substantially an identical shape as the test strip 60 and is dedicated for use in acquiring the calibration data. The fluorescence reference strip 60A provided with the fluorescence determination element 66 is employed in the determination system 10 of the present exemplary embodiment.

(7) Measurement Target Measurement Method by Determination System

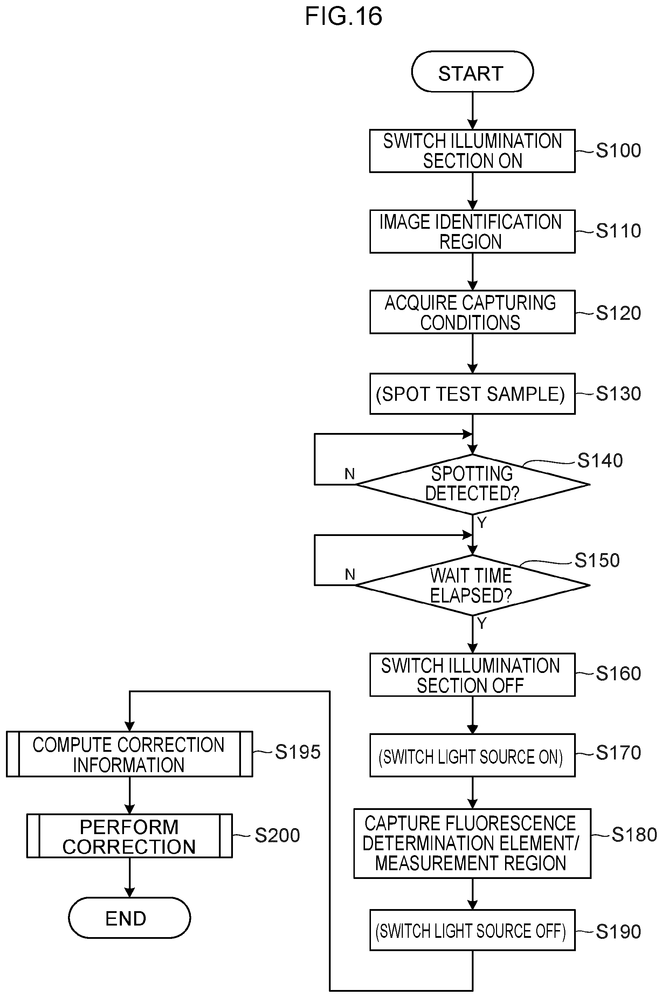

An example of a measurement target measurement method by the determination system 10 of the present exemplary embodiment will now be described with reference to the flowchart of Fig. 16. Note that in this flowchart stages indicating operations other than those operations directly performed by the mobile device 50 are shown schematically by being bracketed.

First, as illustrated in Fig. 11, the determination system 10 is prepared with the mobile device 50 placed in the housing 20 with the holder 40 mounted to the placement portion 30, and the test strip 60 is inserted through the insertion port 41. When, at this stage, an operation is performed on a screen of the display section 53 (see Fig. 11 and Fig. 14), a measurement application already installed on the mobile device 50 is started up, and measurement is started.

Initially, at the stage indicated by S100, the illumination switching unit 200 (see Fig. 14) illuminates the illumination section 52. At this stage illumination of the light source 42 of the holder 40 is extinguished. Next, at the stage indicated by S110, the capturing section 51 captures the identification region 62 using the illumination section 52 as the light source. Processing proceeds to the stage indicated by S120 when capturing is complete.

At the stage indicated by S120, the control section 100 references the capturing condition storage unit 210 (see Fig. 14) and acquires, from the image capturing the identification region 62, the capturing conditions when the test strip 60 was measured.

Next, at the stage illustrated in S130, an appropriate amount of a test sample is spotted onto the test sample spotting portion 63 (see Fig. 3A) of the test strip 60 by a measurer. The test sample that has been spotted is spread toward the downstream side by the test paper 64 (see Fig. 3A) inside the test strip 60.

When this is occurring, at the stage indicated by S140, the spot application detection unit 220 (see Fig. 14) of the control section 100 uses the image from the capturing section 51 to continue to monitor whether or not an image has been detected in the measurement region 61 that indicates that spot application has been completed (for example, indicates that the control reaction band 70 has been generated due to a reaction with the measurement target). Processing proceeds to the stage indicated by S150 when such an image has been detected.

At the stage indicated by S150, after detection of completion of spot application at the stage indicated by S140, the wait time measurement unit 230 (see Fig. 14) of the control section 100 continues to monitor whether or not, from out of the capturing conditions acquired at the stage indicated by S120, a wait time needed for reaction between the measurement target and the reagent in the test paper 64 has elapsed.

When determination by the wait time measurement unit 230 is that the wait time has elapsed at the stage indicated by S150, the illumination switching unit 200 extinguishes illumination of the illumination section 52 at the stage indicated by S160.

On the other hand, at the stage indicated by S170, the light source 42 is illuminated in the holder 40 when the light source control section 48 detects extinguished illumination of the illumination section 52 using the sensor 47 (see Fig. 1 and Fig. 14).

When the light source 42 is illuminated, at the stage indicated by S180, the capturing section 51 captures, as calibration data, each of the fluorescent portions 66a to 66f in the fluorescence determination element 66 excited by the wavelength of measurement light from the light source 42, and also captures, as measurement data, measurement positions including the target reaction band 71 and the control reaction band 70 (see Fig. 19) made visible by being excited by the wavelength of measurement light from the light source 42 in the measurement region 61. Specifically, RGB values (for example from 0 to 255) obtained for each of the pixels of the image data captured by the capturing section 51 of the mobile device 50 are obtained as primary data, and data resulting from measuring the fluorescence intensity at a particular wavelength in this primary data is acquired as the measurement data or the calibration data for each position.

The calibration data of the measurement region 61 captured at this stage is, for example, as illustrated in Fig. 19. This calibration data indicates that the plural fluorescent portions 66a to 66f in the fluorescence determination element 66 being captured emit mutually different fluorescence. The light source control section 48 of the holder 40 extinguishes illumination of the light source 42 at the stage indicated by S190 when capturing is complete. Processing then proceeds to stage indicated by S195 and correction information is computed.

Herein, as a first example thereof, consider a case in which coating materials that emit fluorescent light of different intensities for the same fluorescence wavelength are respectively coated onto the fluorescent portions 66a to 66f. In this first example, as illustrated in following Table 1, values 40, 80, 120, 160, 200, and 240 are respectively stored as data in the storage device 150 of the control section 100 (see Fig. 15) as reference values of fluorescence intensity corresponding to the fluorescent portions 66a, 66b, 66c, 66d, 66e, and 66f, from upstream to downstream.

Table 1

| Fluorescent Portion | Fluorescence Intensity | | Benchmark Value/ Actual Measurement Value | Average of Two Adjacent Values | |
|---|---|---|---|---|---|
| | Benchmark Value | Actual Measurement Value | | | |
| 66a | 40 | 36 | 1.111 | 1.089 | |
| 66b | 80 | 75 | 1.067 | | 1.079 |
| 66c | 120 | 110 | 1.091 | 1.090 | |
| 66d | 160 | 147 | 1.088 | | 1.103 |
| 66e | 200 | 179 | 1.117 | 1.104 | |
| 66f | 240 | 220 | 1.091 | | |
| Average | - | - | 1.094 | - | |

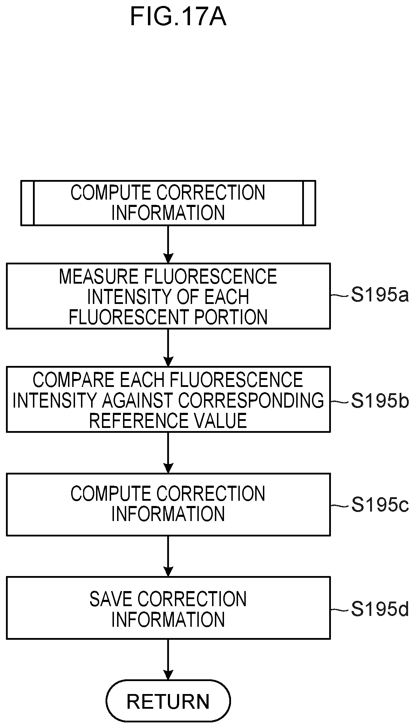

In the first example, at the stage indicated by S180, from the calibration data illustrated in Fig. 19, the determination unit 245 of the control section 100 determines plural fluorescence data as the fluorescence information corresponding to the respective fluorescent portions 66a to 66f based on the layout of the fluorescent portions 66a to 66f. Then, at the stage indicated by S195a of Fig. 17A, the fluorescence intensities are determined as the actual measurement values such as listed in Table 1 from the fluorescence information associated with the respective fluorescent portions 66a to 66f. Next, at the stage indicated by S195b, the analysis unit 250 compares the actual measurement values of the fluorescence intensities measured for the respective fluorescent portions 66a to 66f against reference values of the corresponding fluorescent portion 66a to 66f. For example, as listed in Table 1, a multiple is computed of reference value with respect to the actual measurement value, and these are taken as comparison values.

Next, at stage indicated by S195c, the analysis unit 250 computes correction information for correcting the actual measured fluorescence intensities from the comparison values obtained at the stage indicated by S195b. Then, at the stage indicated by S195d, the analysis unit 250 saves this correction information in the storage device 150.

For example, an average of all the comparison values (1.094 in Table 1) may be taken as the correction information, and the fluorescence intensity sensitivity of the capturing section 51 may be adjusted by multiplying all of the actual measurement values of the fluorescence intensity of the image data captured by the capturing section 51 by this universal correction information (1.094) (a first example A).

Alternatively, an average of adjacent comparison values may be computed as the correction information, and as illustrated in Table 1, the sensitivity of the fluorescence intensity of the capturing section 51 may be adjusted by multiplying the actual measurement values of the fluorescence intensity captured by the capturing section 51 respectively by 1.089 as the correction information when in a range of less than 75, by 1.079 as the correction information when in a range of 75 or greater but less than 110, by 1.090 as the correction information when in a range of 110 or greater but less than 147, by 1.103 as the correction information when in a range of 147 or greater but less than 179, and by 1.104 as the correction information when in a range 179 or greater (a first example B).

Alternatively, a configuration may be adopted in which, as the correction information, a regression line having the actual measurement values of the fluorescence intensity as x and the reference values as y is computed, then the reference value y fitting the actual measurement value x is obtained from this correction information, and the fluorescence intensity sensitivity of the capturing section 51 is adjusted thereby (a first example C). For the case illustrated in Table 1, the regression line is as defined in the following Equation 1.

$$y = 1.1024\,x + 0.9214 \qquad \ldots \text{Equation (1)}$$

Next, as a second example, consider a case in which coating materials that emit fluorescent light of mutually different wavelengths are coated onto the respective fluorescent portions 66a to 66f. In the second example, as illustrated in following Table 2, the storage device 150 of the control section 100 (see Fig. 15) is stored, as data with, from upstream to downstream, reference values 640 nm and 620 nm corresponding to color tone R having an expected wavelength peak value of 630 nm respectively associated with the fluorescent portion 66a and the fluorescent portion 66b, reference values 540 nm and 520 nm corresponding to color tone G having an expected wavelength peak value of 530 nm respectively associated with the fluorescent portion 66c and the fluorescent portion 66d, and reference values 470 nm and 450 nm corresponding to color tone B having an expected wavelength peak value of 460 nm respectively associated with the fluorescent portion 66e and the fluorescent portion 66f.

Table 2

| Fluorescent Portion | Color Tone | Wavelength (nm) | | | Average of Two Corresponding Values |
|---|---|---|---|---|---|
| | | Peak Value | Benchmark Value | Actual Measurement Value | |
| 66a | R | 630 | 640 | 642 | 632.0 |
| 66b | | | 620 | 622 | |
| 66c | G | 530 | 540 | 543 | 532.0 |
| 66d | | | 520 | 521 | |
| 66e | B | 460 | 470 | 472 | 460.5 |
| 66f | | | 450 | 449 | |

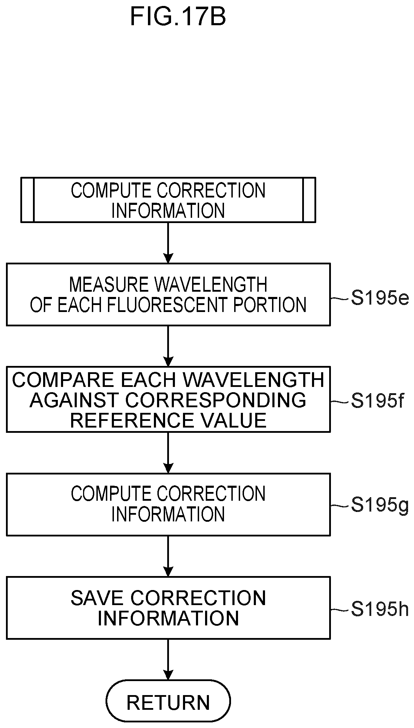

In the second example, at the stage indicated by S180, the determination unit 245 of the control section 100 determines, from the calibration data illustrated in Fig. 19, plural fluorescence data as fluorescence information corresponding to each of the respective fluorescent portions 66a to 66f by determination based on the layout of the fluorescent portions 66a to 66f. Then, at the stage indicated by S195e of Fig. 17B, from the fluorescence information associated with each of the fluorescent portions 66a to 66f, the wavelength is measured as in the actual measurement values listed in Table 2. Next, at the stage indicated by S195f, the analysis unit 250 compares the actual measurement values of the wavelengths measured for each of the fluorescent portions 66a to 66f against the corresponding reference value for the fluorescent portions 66a to 66f.

Then, at the stage indicated by S195g, the analysis unit 250 computes correction information for correcting the actual measurement wavelengths. For example, in the case illustrated in Table 2, averages are respectively computed for actual measurement values corresponding to color tones R, G, and B, and these are taken as the correction information.

Then, the analysis unit 250, at the stage indicated by S195h, saves this correction information in the storage device 150.

After the stage indicated by S195 of Fig. 16, at the stage indicated by S200, the analysis unit 250 employs the correction information computed at the stage indicated by S195c (for the first example) or at the stage indicated by S195g (for the second example) to perform correction on the measurement data that has been captured.

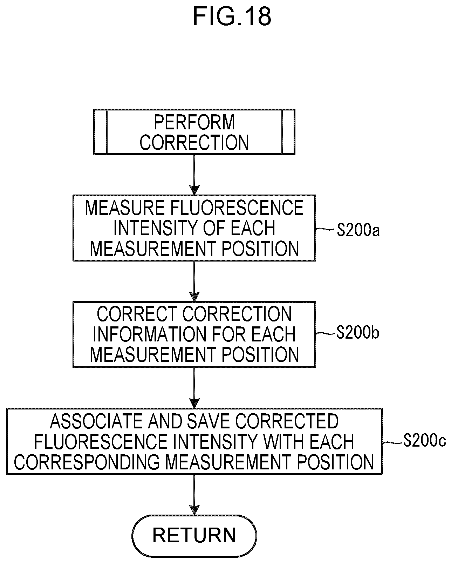

Specifically, at the stage indicated by S200a of Fig. 18, the image acquisition unit 235 measures the emission intensity for each of the measurement positions on the measurement image that has been captured. Next, at the stage indicated by S200b, for the emission intensities, the analysis unit 250 corrects each of the emission intensities in the measurement image by applying the correction information computed at the stage indicated by S195c (first example), or at stage indicated by S195g (second example) to each of the measurement positions in the measurement image.

For example, for the first example A, the analysis unit 250 corrects the emission intensities by multiplying the emission intensities for each of the measurement positions by an average of comparison values such as illustrated in Table 1 (specifically 1.094) as a universal value of the correction information.

For the first example B, the analysis unit 250 corrects the emission intensities by multiplying the emission intensities for each of the measurement positions by the average of two adjacent values as listed in Table 1 corresponding to the range that the emission intensity falls in as the correction information.

For the first example C, the analysis unit 250 corrects the emission intensities by substituting the emission intensities for each of the measurement positions as value X in Equation (1) serving as correction information, and obtaining a value Y.

Moreover, for the second example, in a fluorescence spectrum recorded as pixel information for pixels corresponding to each of the measurement position, the analysis unit 250 performs correction such that a wavelength of an average of corresponding two values as the correction information illustrated in Table 2 is taken as the respective peak values for RGB. Namely, correction is performed such that the peak value for emission intensity for color tone R is at 632 nm, which is the average value for the actual measurement values, instead of at 630 nm. Moreover, correction is performed such that the peak value for emission intensity for color tone G is at 532 nm, which is the average value for the actual measurement values, instead of at 530 nm. Furthermore, correction is performed such that the peak value for emission intensity for color tone B is at 460.5 nm, which is the average value for the actual measurement values, instead of at 460 nm.

After the emission intensities have been corrected at S200b for each of the measurement positions, at the stage indicated by S200c, the corrected emission intensities for each of the measurement positions on the measurement image are saved in the storage device 150 (see Fig. 15), and then the measurement target is measured by a calculation of the content of the measurement target being performed by the analysis unit 250.

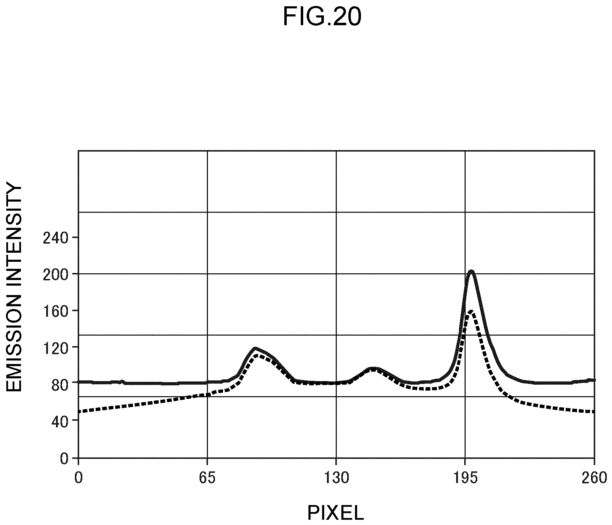

An example of the post-correction emission intensities in the measurement data is represented by the solid line on the graph illustrated in Fig. 20. Namely, the emission intensities prior to correction as indicated by the broken line on the graph are transformed by correction into the solid line on the graph.

Due to adopting the configuration described above, in the determination system 10 of the present disclosure, the measurement data measured using the mobile device 50 is corrected by fluorescence information obtained from the fluorescence determination element 66, thereby enabling fluctuations due to differences in the specific mobile device 50 employed to be avoided in measurement results.

(8) Other

Although in the examples described above the fluorescence determination element 66 is provided to the test strip 60, the fluorescence determination element 66 may be provided to a fluorescence reference strip 60A that is separate to the test strip 60 and is dedicated for use in acquisition of calibration data, as in a different example illustrated in Fig. 21. In such cases, the fluorescence reference strip 60A is first mounted to the housing 20 and the correction information acquired, and then after this the fluorescence reference strip 60A is removed, and the measurement data is acquired by mounting the test strip 60 to the housing 20.

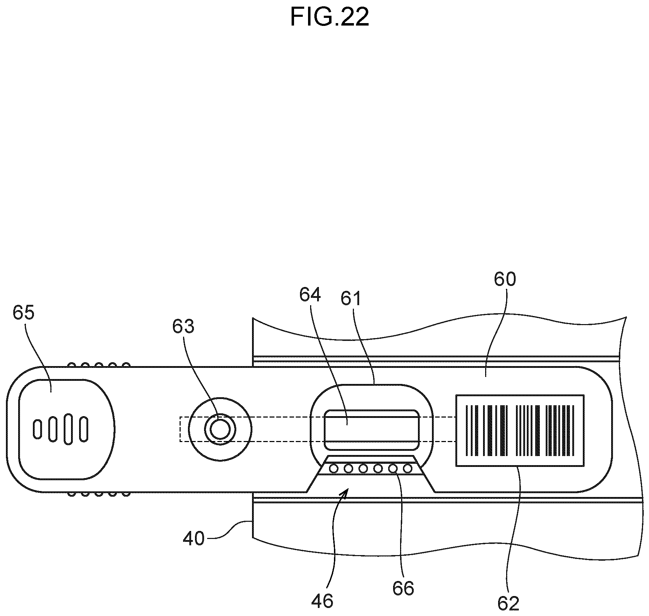

Moreover, the fluorescence determination element 66 may be provided inside the housing section 46 of the holder 40, as in yet another different example illustrated in Fig. 22. In the example of Fig. 22, a notch in a side portion of the test strip 60 is configured larger than in the example illustrated in Fig. 3A. Then, in a state in which the test strip 60 has been inserted into the housing section 46 of the holder 40, the position of the notch is aligned with the position of the fluorescence determination element 66. This means that the test paper 64 and the fluorescence determination element 66 fall within the same visual field of the capturing section 51.

Industrial Applicability

The technology disclosed herein is applicable to a measurement system for developing and optically detecting a measurement target in a test sample using a test strip.

**Claims**

1. A determination system (10), comprising:

    a fluorescence determination element (66) having a predetermined plurality of fluorescent portions (66a to 66f) arranged at predetermined positions;
    a light source (42) that irradiates the fluorescence determination element (66) with a single excitation light; and
    a control section (100) including an image acquisition unit (235) that acquires calibration data, which is image data from capturing the fluorescence determination element (66) irradiated by the light source (42), and a determination unit (245) that determines fluorescence information based on the calibration data.

2. The determination system (10) of claim 1, wherein:

    the fluorescent portions (66a to 66f) emit mutually different fluorescent light by being irradiated with the excitation light;
    the calibration data includes a plurality of fluorescence data corresponding to respective fluorescent light emitted by the plurality of fluorescent portions (66a to 66f); and
    the determination system (10) further comprises an analysis unit (250) that computes correction information by comparing the fluorescence information determined by the determination unit (245) from the plurality of fluorescence data against a plurality of respective reference values acting as a reference for each of the fluorescent portions (66a to 66f).

3. The determination system (10) of claim 2, wherein:

    the light source (42) radiates the excitation light onto a test strip (60) on which a reagent has been placed in addition to onto the fluorescence determination element (66);

the image acquisition unit (235) acquires measurement data, which is image data from capturing the test strip (60) irradiated by the light source (42), in addition to the calibration data; and

the analysis unit (250) corrects the measurement data based on the correction information.

4. The determination system (10) of claim 3, wherein:

the image acquisition unit (235), as well as capturing the fluorescence determination element (66) and the test strip (60) irradiated by the light source (42) to produce a single image data, the image acquisition unit (235) acquires the calibration data and the measurement data from the single image data.

5. The determination system (10) of claim 2, wherein the determination unit (245) determines the fluorescence information from the calibration data based on a layout of the fluorescence determination element (66).

6. The determination system (10) of claim 2, wherein fluorescent light of the plurality of respective fluorescent portions (66a to 66f) have mutually different fluorescence intensities as the fluorescence information.

7. The determination system (10) of claim 2, wherein fluorescent light of the plurality of respective fluorescent portions (66a to 66f) have mutually different wavelengths as the fluorescence information.

8. The determination system (10) of claim 2, wherein:

the determination system (10) further comprises a mobile device (50) including a camera as the image acquisition unit (235); and

a central processing unit (110) of the mobile device (50) functions as the control section (100).

9. The determination system (10) of claim 3, wherein:

the determination system (10) further comprises a mobile device (50) including a camera as the image acquisition unit (235); and

a central processing unit (110) of the mobile device (50) functions as the control section (100).

10. The determination system (10) of claim 9, wherein:

the determination system (10) further comprises a housing (20) at which the test strip (60) is mounted; and

the housing (20) includes:

a placement portion (30) for holding the mobile device (50), and

a holder (40) that the test strip (60) is inserted into and that is provided with the light source (42) and mounted to the placement portion (30).

11. The determination system (10) of claim 3, claim 9, or claim 10, wherein the fluorescence determination element (66) is provided to the test strip (60).

12. The determination system (10) of claim 3, claim 9, or claim 10, wherein the fluorescence determination element (66) is provided to a fluorescence reference strip (60A) that is dedicated for use in acquisition of the calibration data and that is substantially an identical shape as the test strip (60).

13. The determination system (10) of claim 10, wherein the fluorescence determination element (66) is provided to the holder (40).

14. A test strip (60) that is employed in the determination system (10) of claim 11 and that is provided with the fluorescence determination element (66).

15. A fluorescence reference strip (60A) that is employed in the determination system (10) of claim 12 and that is provided with the fluorescence determination element (66).

# FIG.1

# FIG.2

# FIG.3A

FIG.3B

66

66a 66b 66c 66d 66e 66f

# FIG.4

# FIG.5

# FIG.6

# FIG.7

# FIG.8

# FIG.9

# FIG.10

# FIG.11

# FIG.12

# FIG.13

# FIG.14

MOBILE DEVICE · 50 / 51

**CONTROL SECTION** · 100

| 200 | ILLUMINATION SWITCHING UNIT |
| 210 | CAPTURING CONDITION STORAGE UNIT |
| 220 | SPOT APPLICATION DETECTION UNIT |
| 230 | WAIT TIME MEASUREMENT UNIT |
| 235 | IMAGE ACQUISITION UNIT |
| 240 | IMAGE STORAGE UNIT |
| 245 | DETERMINATION UNIT |
| 250 | ANALYSIS UNIT |

CAPTURING SECTION · 51

DISPLAY SECTION · 53

ILLUMINATION SECTION · 52

HOLDER · 10 / 40 / 48

LIGHT SOURCE · 42

SENSOR · 47

LIGHT SOURCE CONTROL SECTION

# FIG.15

# FIG.16

```
                    ┌─────────────┐
                    │    START    │
                    └──────┬──────┘
                           │
              ┌────────────▼────────────┐
              │  SWITCH ILLUMINATION    │── S100
              │     SECTION ON          │
              └────────────┬────────────┘
                           │
              ┌────────────▼────────────┐
              │  IMAGE IDENTIFICATION   │── S110
              │       REGION            │
              └────────────┬────────────┘
                           │
              ┌────────────▼────────────┐
              │  ACQUIRE CAPTURING      │── S120
              │     CONDITIONS          │
              └────────────┬────────────┘
                           │
              ┌────────────▼────────────┐
              │  (SPOT TEST SAMPLE)     │── S130
              └────────────┬────────────┘
```

SWITCH ILLUMINATION SECTION ON — S100

IMAGE IDENTIFICATION REGION — S110

ACQUIRE CAPTURING CONDITIONS — S120

(SPOT TEST SAMPLE) — S130

SPOTTING DETECTED? — S140    N / Y

WAIT TIME ELAPSED? — S150    N / Y

SWITCH ILLUMINATION SECTION OFF — S160

(SWITCH LIGHT SOURCE ON) — S170

CAPTURE FLUORESCENCE DETERMINATION ELEMENT/ MEASUREMENT REGION — S180

(SWITCH LIGHT SOURCE OFF) — S190

COMPUTE CORRECTION INFORMATION — S195

PERFORM CORRECTION — S200

END

# FIG.17A

```
┌──┬──────────────────────────┬──┐
│  │   COMPUTE CORRECTION     │  │
│  │      INFORMATION         │  │
└──┴──────────────────────────┴──┘
              │
              ▼
┌────────────────────────────────┐
│   MEASURE FLUORESCENCE         │ ─── S195a
│     INTENSITY OF EACH          │
│    FLUORESCENT PORTION         │
└────────────────────────────────┘
              │
              ▼
┌────────────────────────────────┐
│  COMPARE EACH FLUORESCENCE     │
│ INTENSITY AGAINST CORRESPONDING│ ─── S195b
│       REFERENCE VALUE          │
└────────────────────────────────┘
              │
              ▼
┌────────────────────────────────┐
│    COMPUTE CORRECTION          │ ─── S195c
│      INFORMATION               │
└────────────────────────────────┘
              │
              ▼
┌────────────────────────────────┐
│     SAVE CORRECTION            │ ─── S195d
│      INFORMATION               │
└────────────────────────────────┘
              │
              ▼
        ╭──────────╮
        │  RETURN  │
        ╰──────────╯
```

# FIG.17B

```
┌─┬──────────────────────────────┬─┐
│ │     COMPUTE CORRECTION       │ │
│ │        INFORMATION           │ │
└─┴──────────────────────────────┴─┘
                 │
                 ▼
┌──────────────────────────────────┐
│       MEASURE WAVELENGTH         │──S195e
│  OF EACH FLUORESCENT PORTION     │
└──────────────────────────────────┘
                 │
                 ▼
┌──────────────────────────────────┐
│   COMPARE EACH WAVELENGTH        │
│   AGAINST CORRESPONDING          │──S195f
│       REFERENCE VALUE            │
└──────────────────────────────────┘
                 │
                 ▼
┌──────────────────────────────────┐
│      COMPUTE CORRECTION          │──S195g
│        INFORMATION               │
└──────────────────────────────────┘
                 │
                 ▼
┌──────────────────────────────────┐
│       SAVE CORRECTION            │──S195h
│        INFORMATION               │
└──────────────────────────────────┘
                 │
                 ▼
            (  RETURN  )
```

# FIG.18

```
┌─┤PERFORM         ├─┐
│ │CORRECTION      │ │
└─┴────────────────┴─┘
        │
        ▼
┌────────────────────┐
│MEASURE FLUORESCENCE│
│  INTENSITY OF EACH │──S200a
│MEASUREMENT POSITION│
└────────────────────┘
        │
        ▼
┌────────────────────┐
│ CORRECT CORRECTION │
│ INFORMATION FOR EACH│──S200b
│MEASUREMENT POSITION│
└────────────────────┘
        │
        ▼
┌──────────────────────────────┐
│ ASSOCIATE AND SAVE CORRECTED  │
│FLUORESCENCE INTENSITY WITH EACH│──S200c
│CORRESPONDING MEASUREMENT POSITION│
└──────────────────────────────┘
        │
        ▼
     ( RETURN )
```

FIG.19

FIG.20

FIG.21

FIG.22

Europäisches
Patentamt

European
Patent Office

Office européen
des brevets

# EUROPEAN SEARCH REPORT

**Application Number**

EP 25 18 1080

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/273528 A1 (EHRENKRANZ JOEL R L [US]) 17 October 2013 (2013-10-17) * paragraphs [0006], [0035] - [0038], [0056] - [0058], [0061], [0062], [0085]; figures 1,4,5 * | 1-15 | INV. G01N21/84 ADD. G01N21/77 |
| X | US 2019/302009 A1 (BORICH DAMON VINCENT [US] ET AL) 3 October 2019 (2019-10-03) | 1-3,5-7, 11,12, 14,15 | |
| A | * paragraphs [0002], [0004], [0046], [0059], [0066], [0077], [0094]; figures 4,12,13 * | 4,8,10, 13 | |
| A | GB 2 592 432 A (INTELLIGENT FINGERPRINTING LTD [GB]) 1 September 2021 (2021-09-01) * the whole document * | 1-15 | |
| A | EP 4 361 611 A1 (ARKRAY INC [JP]) 1 May 2024 (2024-05-01) * the whole document * | 1-15 | |

**TECHNICAL FIELDS SEARCHED (IPC)**

G01N

The present search report has been drawn up for all claims

| Place of search | Date of completion of the search | Examiner |
|---|---|---|
| Berlin | 21 October 2025 | Navas Montero, E |

EPO FORM 1503 03.82 (P04C01)

## ANNEX TO THE EUROPEAN SEARCH REPORT
## ON EUROPEAN PATENT APPLICATION NO.

EP 25 18 1080

This annex lists the patent family members relating to the patent documents cited in the above-mentioned European search report.
The members are as contained in the European Patent Office EDP file on
The European Patent Office is in no way liable for these particulars which are merely given for the purpose of information.

21-10-2025

| Patent document cited in search report | | | Publication date | Patent family member(s) | | | Publication date |
|---|---|---|---|---|---|---|---|
| US 2013273528 | A1 | | 17-10-2013 | US | 2013273528 | A1 | 17-10-2013 |
| | | | | US | 2019086400 | A1 | 21-03-2019 |
| US 2019302009 | A1 | | 03-10-2019 | NONE | | | |
| GB 2592432 | A | | 01-09-2021 | AU | 2021225394 | A1 | 08-09-2022 |
| | | | | EP | 4111173 | A1 | 04-01-2023 |
| | | | | GB | 2592432 | A | 01-09-2021 |
| | | | | US | 2023087664 | A1 | 23-03-2023 |
| | | | | WO | 2021171023 | A1 | 02-09-2021 |
| EP 4361611 | A1 | | 01-05-2024 | EP | 4361611 | A1 | 01-05-2024 |
| | | | | US | 2024139730 | A1 | 02-05-2024 |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022518364 A
- JP 2012047462 A
- US 20100321681 A1
- JP 2022002116 A